# FASCICULE DE BREVET EUROPEEN

(11) **EP 1 340 670 B1**
(45) Date de publication et mention de la délivrance du brevet: **03.01.2007**
(21) Numéro de dépôt: 03290356.9
(22) Date de dépôt: 14.02.2003
(51) Int. Cl.: B62D 53/00, B60G 3/20, B62D 7/15, B62D 7/06

(54) **Module de roue indépendant et véhicule utilisant ce module**
Unabhängiges Radmodul und ein solches Modul benutzendes Fahrzeug
Independent wheel module and vehicle using such a module

(30) Priorité: 28.02.2002 FR 0202569
(43) Date de publication de la demande: 03.09.2003
(73) Titulaire: Techni-Metal Entreprise, 60150 Melicocq (FR)
(72) Inventeur: Berger, Christian, 26250 Livron (FR)
(74) Mandataire: Debay, Yves

(56) Documents cités:
- EP-A- 0 870 671
- DE-A- 4 110 638
- DE-C- 3 616 457
- FR-A- 1 497 349
- US-A- 3 302 739
- US-A- 3 314 690

## Description

La présente invention concerne un module de roue utilisé pour la construction d'un engin ou véhicule spécial de chantier ou de manutention, ainsi qu'un tel engin ou véhicule.

Dans des chantiers importants ou spécifiques, par exemple de construction ou de transbordement de charges, certaines tâches sont assurées par des engins mobiles ou véhicules spéciaux conçus et construits spécifiquement en vue de ces tâches. De tels engins peuvent servir par exemple à transporter des charges lourdes ou encombrantes à l'intérieur du chantier, par exemple entre un poste de fabrication et leur emplacement définitif de mise en place ou simplement dans des docks ou une zone de transbordement.

Dans le cas de véhicules à roues, de tels engins sont souvent réalisés en très petites séries ou sur commande, et sont construits à partir d'un châssis supporté par un ou plusieurs trains de roues. Pour des raisons de capacité de charge et de simplicité de conception, et pour pouvoir utiliser des sous-ensembles préexistant sur le marché, un tel train de roues est habituellement conçu sous la forme d'un pont disposé sous un châssis et supportant une partie de ce châssis. On peut définir un tel pont comme un ensemble de plusieurs roues réparties des deux côtés du châssis, et portées par une structure elle-même mobile par rapport au châssis, par exemple comportant un essieu non suspendu passant sous le châssis. Cette structure peut comporter des éléments d'entraînement pour des roues motrices, et des éléments de directions pour des roues directrices. Ce pont est ainsi positionné sous le châssis, le plus souvent par l'intermédiaire d'éléments élastiques et d'éléments amortisseurs, de façon à réaliser une suspension évitant de transmettre au châssis toutes les irrégularités du sol lors du roulement.

Dans certains types de chantiers se présentent des contraintes particulières en matière d'encombrement. En particulier lors de la construction de tunnels, qui est un cas de plus en plus fréquent, il est important que certains engins de travail, de transport, ou de manutention puissent emprunter des passages qui présentent des dimensions très limitées.

De façon à améliorer le rendement ou les performances de tels véhicules, il faut alors pouvoir disposer d'un mode de liaison au sol permettant de transporter de lourdes charges tout en conservant des dimensions extérieures faibles. Il est donc utile de pouvoir positionner le châssis le plus bas possible pour pouvoir utiliser au maximum l'espace vertical disponible.

Un des buts de l'invention est ainsi de proposer un dispositif de liaison au sol par roue permettant de réaliser un train de roues supportant un châssis positionné le plus bas possible.

Un autre but de l'invention est de proposer un véhicule utilisant un tel dispositif de roue.

Du fait d'un faible espace disponible sur le chantier, il est également utile pour un tel véhicule de pouvoir manoeuvrer selon des rayons de braquage très court ou même de pouvoir se déplacer « en crabe », c'est à dire selon une direction non longitudinale par rapport au véhicule.

Un des buts de l'invention est ainsi de proposer un véhicule dont plusieurs trains de roues sont directeurs, en parallèle ou en opposition entre eux.
On connaît déjà dans l'état de la technique, des solutions décrivant des dispositifs de liaison au sol supportant tout ou partie d'un châssis de véhicule ou engin spécial de chantier ou de manutention permettant de transporter de lourdes charges tout en conservant des dimensions extérieures faibles.
Ainsi, les brevets US 3 314 690 et US 3 302 739 se référant l'un à l'autre, divulguent un module de liaison au sol supportant une part d'un châssis de véhicule destiné à transporter des tas de minerais déformables, par exemple des tas de charbon (US 3 302 739, colonne 4, ligne 41) dans des tunnels de mines.
Le module selon US 3 314 690 et US 3 302 739, qui couvre les caractéristiques du preambule de la revendication 1, comporte une ou plusieurs roues permettant le déplacement du véhicule. Au moins une de ces roues supporte une part du châssis par des moyens de liaison au sol commandés, disposés sur au moins un côté du châssis. Ces moyens de liaison au sol occupent un volume qui ne s'étend pas jusqu'à la partie médiane du châssis selon l'axe de la roue. Le module selon US 3 314 690 et US 3 302 739 comprend un moyen de régulation de la déformation de la structure du module de roue. Le fonctionnement de ce moyen de régulation de la déformation est basé sur la cinématique d'un parallélogramme de côtés rigides et de sommets d'angles variables (US 3 314 690 : figure 9 ; colonne 7, lignes 19-22, 26-30 ; US 3 302 739 : figure 5 ; colonne 5, lignes 1-67 ; colonne 9, lignes 41-46). Cependant, les éléments (référencés 79, 80, 81 sur les figures 3 et 5 de US 3 302 739) dudit moyen de régulation de la déformation sont rigides (US 3 302 739 : colonne 5, lignes 47-51 et colonne 9, lignes 46-49). Ainsi, le module selon US 3 314 690 et US 3 302 739 ne permet pas d'amortir des oscillations du châssis par rapport à la roue. De plus, la déformation du module de roue selon US 3 314 690 et US 3 302 739 ne peut s'effectuer qu'à condition d'une déformation conjointe en sens inverse du module de roue opposé (US 3 302 739 : colonne 9, lignes 36-41, lignes 68-71).

Ce but est atteint par un module de liaison au sol supportant tout ou partie d'un châssis de véhicule ou engin spécial de chantier ou de manutention, ce module comprenant une ou plusieurs roues permettant le déplacement de tout ou partie de ce véhicule, au moins une de ces roues supportant une part du châssis par des moyens de liaison au sol commandés, disposés sur au moins un côté du châssis, occupant un volume qui ne s'étend pas jusqu'à la partie médiane du châssis selon l'axe de la roue, et comportant la possibilité d'un déplacement de l'axe de la roue par rapport au châssis, caractérisé en ce que le module de liaison au sol dispose des moyens de suspension assurant le déplacement de l'axe de la roue par rapport au châssis indépendamment :
- de la position ou de l'état des roues ou moyens de liaison au sol supportant ledit châssis et situés à l'extérieur de ce module, et
- du déplacement de l'axe des roues des autres modules par rapport au châssis.

Selon une particularité, la roue est montée par une liaison pivot sur une fusée, dite fusée de roue, cette fusée de roue étant mobile en rotation par rapport au châssis selon un axe de direction formant avec la surface où s'appuie la roue un angle supérieur à 45 DEG , la rotation de la fusée de roue autour de cet axe de direction étant commandée par déplacement d'un élément, dit biellette de direction, relié à la fusée de roue en un point décalé d'une certaine distance par rapport à l'axe de direction, cette rotation permettant au module d'assurer une fonction directrice.

Selon une particularité, la fusée de roue est reliée au châssis par l'intermédiaire d'une structure déformable, dite structure de suspension, apte à se déformer dans une direction verticale, ou perpendiculaire à la face du châssis portant le module, cette déformation se faisant selon la cinématique d'un parallélogramme de côtés rigides et de sommets d'angles variables, la biellette de direction étant reliée à ses deux extrémités par des liaisons rotules lui permettant de rester sensiblement parallèle à l'un des côtés du parallélogramme.

Selon une particularité, la déformation de la structure déformable est commandée par la variation de longueur d'une jambe de suspension reliée à ses deux extrémités à deux éléments formant des côtés opposés du parallélogramme de déformation de cette structure déformable, cette jambe de suspension réalisant un contrôle de la hauteur de la suspension sous l'action éventuellement partielle d'un circuit de fluide sous pression.

Selon une particularité, la jambe de suspension réalise une fonction d'amortissement, de maintien de la hauteur, ou de réglage de la hauteur, ou une combinaison de ces fonctions.

Selon une particularité, le module comprend un moteur entraînant en rotation la roue par rapport à la fusée de roue autour de l'axe de roue.

Selon une particularité, le moteur fonctionne sous l'action d'un fluide sous pression ou d'un courant électrique.

Du fait d'un faible espace disponible sur le chantier, il est également utile pour un tel véhicule de pouvoir manoeuvrer selon des rayons de braquage très court ou même de pouvoir se déplacer « en crabe », c'est à dire selon une direction non longitudinale par rapport au véhicule.
On connaît déjà dans l'état de la technique, des solutions traitant le problème d'optimisation du rayon de braquage très court.
Ainsi, le brevet FR 1.497.349 divulgue un véhicule comprenant une benne disposée entre deux tracteurs et portée par ceux-ci (page 1, colonne de droite, ligne 39 - page 2, colonne de gauche, lignes 1-2). Chacun des tracteurs est porté par quatre jeux de roues jumelées et dont aucune des roues n'étant dirigeable par rapport au tracteur (page 2, colonne de gauche, lignes 25-28). La direction du tracteur est assurée par des vérins de direction liés au châssis et provoquant le déplacement angulaire des tracteurs par rapport au châssis (page 2, colonne de gauche, lignes 38-30 et 38-41). Cependant, un tel effet de direction provoque le dérapage ou le frottement des pneumatiques sur le sol beaucoup plus que ne le fait la direction de type classique (page 2, colonne de gauche, lignes 41-44). En outre, la direction selon FR 1.497.349 limite les possibilités de trajectoires et de déplacements dans un espace confiné, par exemple dans un tunnel.

Un des buts de l'invention est ainsi de proposer un véhicule dont plusieurs trains de roues sont directeurs, en parallèle ou en opposition entre eux.
On connaît déjà dans l'état de la technique, des solutions traitant le problème de direction d'un véhicule à essieux multiples.
Ainsi, la demande de brevet EP 0 870 671 A2 divulgue un véhicule de chantier, par exemple une grue mobile, avec au moins trois agencements d'essieux (avant, médian et arrière) (colonne 4, lignes 30-33) et porte sur la direction d'un tel véhicule permettant de braquer, conjointement et séparément, les essieux par l'intermédiaire d'un dispositif à bielle/vérin de direction (fig. 1, 4). Cependant, le véhicule selon EP 0 870 671 A2 ne permet pas d'amortir des oscillations du châssis par rapport aux roues.

Ce but est atteint par un véhicule en une ou plusieurs parties et comportant au moins un train de roues directrices composé d'au moins deux modules selon l'une des revendications précédentes, ces deux modules étant disposés de chaque côté du châssis et incluant une fonction directrice avec, dans au moins un des modules, un plan de roulement de la roue formant un angle, dit angle de commande de direction avec un plan de commande de direction, ce plan passant par l'axe de direction et le centre de rotation de la liaison rotule reliant la fusée de roue et la biellette de direction, cet angle de commande de direction étant choisi pour que, lors du braquage d'un train, les axes des roues des modules d'un même train définissent un point déterminé, dit centre de braquage, par l'intersection de leur projection verticale sur le sol.

Selon une particularité, au moins un module d'un train comporte une biellette de direction reliée du côté du châssis à une extrémité d'un bras de direction, ce bras de direction étant relié au châssis par une liaison pivot et étant commandé en rotation par un actionneur, le train comportant au moins une barre de direction reliant le bras de direction ou la biellette de direction d'un module avec le bras de direction ou la biellette de direction d'un autre module du même train.

Selon une particularité, au moins un bras de direction présente une forme en « L », l'intersection des branches supportant la liaison au châssis, l'une des branches étant reliée à la biellette de direction et à la barre de direction, l'autre branche étant reliée à l'actionneur cet actionneur comprenant un vérin formant avec l'axe longitudinal du châssis un angle inférieur à 45°.

Selon une particularité, le véhicule comporte plusieurs modules de roues directrices, au moins un de ces modules, dit autodirecteur, étant commandé en direction par un actionneur associé à des moyens de calcul et de commande aptes à coordonner le braquage de ce train en fonction de celui des autres trains du véhicule.

Selon une particularité, le véhicule comporte au moins un train autodirecteur dont le braquage est déterminé par les moyens de calcul et de commande de façon à ce que son centre de braquage soit sensiblement superposé à celui d'au moins un autre train de roues directrices du véhicule.

Selon une particularité, le véhicule comporte en une de ses extrémités au moins deux trains de roues directrices, une extrémité du bras de direction d'un module étant reliée avec une extrémité du bras de direction d'un module d'un autre train par un timon de direction, cette liaison assurant une coordination du braquage des deux trains.

Selon une particularité, le timon de direction est relié aux bras de direction d'un module de chaque train en deux points définissant une droite formant un angle déterminé avec un plan incluant les axes des liaisons pivots reliant ces deux bras de direction au châssis, la valeur de cet angle pouvant être choisie pour que les centres de braquage des deux trains soient sensiblement superposés.

Selon une particularité, le bras de direction d'au moins un module de chaque train est commandé par un actionneur.

Selon une particularité, le véhicule présente une forme allongée et comporte au moins deux trains de roues directrices situés de chaque côté du centre de gravité du véhicule, le braquage de ces trains étant commandé et coordonné par des moyens de commande de façon à ce que les directions imprimées au châssis par ces deux trains soient dirigées de deux côtés opposés du châssis, cette coordination de braquage de ces trains permettant ainsi un braquage du véhicule selon un faible rayon de braquage.

Selon une particularité, le véhicule présente une forme allongée et comporte au moins deux trains de roues directrices situés de chaque côté du centre de gravité du véhicule, le braquage de ces trains étant commandé et coordonné par des moyens de commande de façon à ce que les directions imprimées au châssis par ces deux trains soient dirigées du même côté du châssis, cette coordination de braquage de ces trains permettant ainsi un déplacement de l'ensemble du véhicule « en crabe », c'est à dire dans une direction incluant une composante latérale par rapport au véhicule.

Selon une particularité, le véhicule comporte au moins deux cabines ou postes de commandes, chacune de ces cabines comportant des moyens de commande de l'ensemble des modules de roues du véhicule.

Selon une particularité, le véhicule comporte au moins deux cabines ou postes de commandes, chacune de ces cabines étant apte à commander séparément une partie des modules ou trains de roues du véhicule.

Selon une particularité, le véhicule comporte deux demi-véhicules dos à dos, articulés entre eux directement ou par l'intermédiaire d'un timon, chaque demi-véhicule comportant un plateau de charge, dont la surface de charge est située au-dessous de l'axe des roues, et une cabine de commande et étant supportée par au moins un train de roues directrices du côté de sa cabine et par au moins un train de roues non directrices du côté de l'articulation.

Selon une particularité, le véhicule comporte deux demi-véhicules tracteur dos à dos et supportant chacun une extrémité d'une partie de charge par une articulation, chaque demi-véhicule comportant une partie de plateau de charge, dont la surface de charge est située au-dessous de l'axe des roues, et une cabine de commande et étant supporté par au moins un train de roues directrices et au moins un train de roues non directrices.

L'invention, avec ses caractéristiques et avantages, ressortira plus clairement à la lecture de la description faite en référence aux dessins annexés dans lesquels :
- la figure 1 représente une vue en coupe transversale d'un véhicule comportant un train de roues réalisé à partir de deux modules selon l'invention, dans une variante comportant suspension, direction et motricité ;
- les figures 2a et 2b représentent des vues partielles en coupe transversale selon l'axe de pivotement de direction, d'un module de roue selon l'invention dans deux positions différentes de suspension, dans une variante comportant suspension, direction et motricité (tringlerie de direction non représentée) ;
- la figure 3 représente une vue de dessus d'un module selon l'invention, incluant une demi-coupe au niveau de l'axe inférieur de la jambe de suspension, dans une variante comportant suspension, direction et motricité ;
- les figures 4a et 4b représentent une vue de dessus d'une partie de châssis utilisant deux trains de roues constitués de modules selon l'invention, le châssis étant figuré comme transparent, dans deux positions différentes de la direction, dans une variante comportant suspension, direction et motricité ;
- la figure 5 représente une vue schématique de dessus d'un véhicule selon l'invention en position de braquage, dans une configuration à deux demi-véhicules comportant chacun une cabine et trois trains directionnels ;
- les figures 6a et 6b représentent une vue schématique de dessus d'un véhicule selon l'invention, en position de virages sinueux et respectivement en position de déplacement latéral oblique ou « en crabe », dans une configuration à deux cabines pivotantes autour d'une partie porte-charge centrale, et comportant quatre trains directionnels ;
- la figure 7 représente une vue latérale en transparence d'un véhicule selon l'invention dans une configuration à deux cabines conduisant chacune une partie porte-charge, ces deux parties porte-charge étant reliées entre elles de façon articulée ;
- la figure 8 représente une vue latérale en transparence d'un véhicule selon l'invention dans une configuration à deux cabines pivotantes autour d'une partie porte-charge centrale.

Dans l'architecture d'un véhicule ou engin spécial comportant un châssis reposant sur au moins deux roues, on définira comme un train de roues un groupe d'au moins deux roues disposées de chaque côté du châssis, en particulier partageant sensiblement le même axe lorsque le véhicule progresse selon son axe principal.

Dans la présente description, les modules de roues sont présentés comme utilisés par paires pour constituer des trains de roues. Sans sortir de l'esprit de l'invention, il est bien sûr tout à fait possible d'utiliser également de tels modules en nombres impairs. De la même façon, il est également possible d'utiliser de tels modules sans qu'ils soient appairés en trains de roues, par exemple disposés en quinconce des deux côtés du véhicule. Il est également possible de disposer plusieurs roues couplées dans un même module, par exemple pour augmenter les capacités de charge ou améliorer la maintenance ou la sécurité. Il est également possible d'utiliser de tels modules de roues pour supporter un châssis ou une partie de châssis présentant une forme différente du châssis classique de forme allongée. Des engins spéciaux articulés en plusieurs parties, ou au châssis de formes diverses, par exemple carré, peuvent ainsi utiliser de tels modules de roues sans sortir de l'esprit de l'invention.

De façon à laisser disponible l'espace compris entre les roues opposées d'un train de roues, un véhicule selon l'invention repose sur des modules de roues fixés directement à son châssis, par exemple sur le côté du châssis. Une telle disposition permet de faire descendre le châssis très bas, par exemple jusqu'à la limite de la garde au sol du véhicule ou à la hauteur de l'axe des roues, sans avoir à laisser sous le châssis l'espace nécessaire au débattement d'un essieu non suspendu.

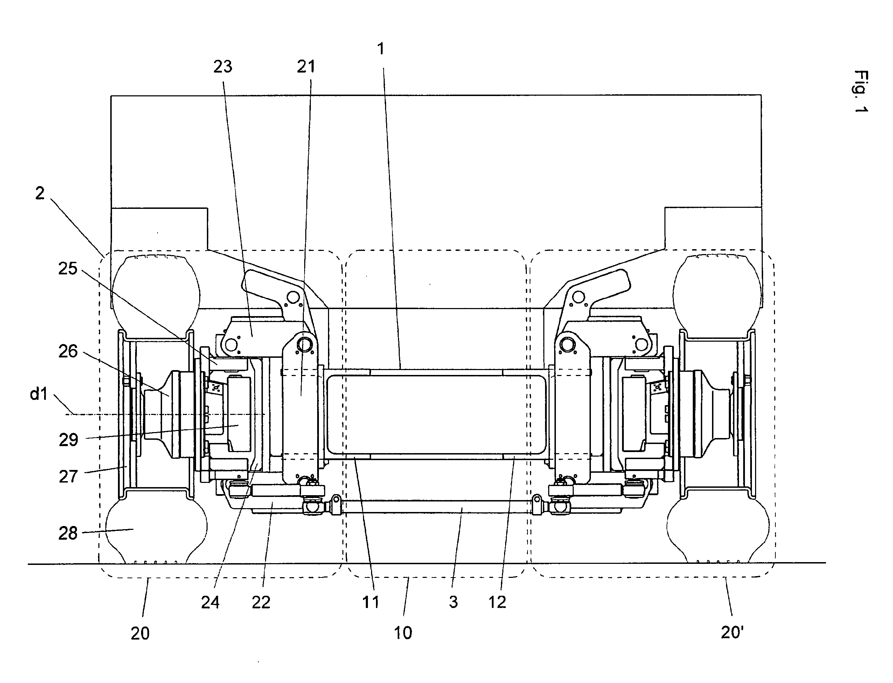

Dans le mode de réalisation illustré en figure 1, le véhicule selon l'invention comporte ainsi un châssis (1) comprenant par exemple un caisson ou deux poutres (11, 12) longitudinales à profil en « I ». De chaque côté de ce châssis, les modules (2) de roue sont ainsi fixés sur le châssis et occupent un espace (20) qui ne s'étend pas jusqu'à la partie (10) médiane de ce châssis. Lorsque des modules sont disposés de façon opposée de chaque côté du châssis, cette partie médiane s'entend bien sûr comme située au milieu de la distance séparant ces deux roues ou modules de roue et descendant jusqu'à une hauteur au moins inférieure à celle de l'axe des roues. Pour des modules de roue qui ne sont pas appairés, voire ne sont disposés que d'un seul côté du châssis, cette partie médiane peut alors naturellement s'interpréter pour chaque module comme étant une partie du véhicule soutenue entre autres par ce module, cette partie incluant l'axe de la roue du module.

Il doit être bien compris que la libération de l'espace (20), par l'utilisation d'un module selon l'invention, n'est pas empêchée par la présence de divers conduits ou organes mécaniques ou autres dispositif pouvant courir sous le châssis ou relier entre eux les modules de roue. Des barres, vérins, ou tringleries de direction peuvent en particulier être placés sous le châssis sans faire perdre le gain d'espace obtenu par l'utilisation d'un module de roue selon l'invention.

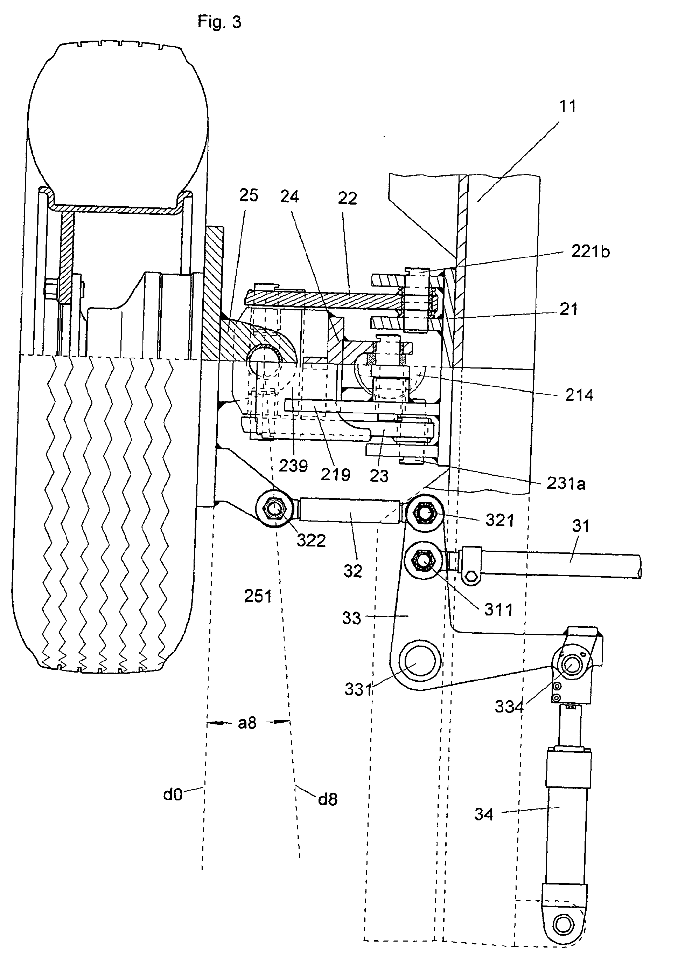

Dans ce mode de réalisation, chaque module présente une fonction de suspension, une fonction directrice, une fonction de freinage, et une fonction motrice. Un tel module est illustré en figures 1, 2a, 2b et 3, et comprend une roue, par exemple sous la forme d'un pneumatique (28) monté de façon connue sur une jante (27). Cette jante est mobile en rotation autour d'un axe (d1) de roue, et est fixée par des moyens connus sur une fusée (25) de roue, par exemple par un montage de roulements radiaux avec butées axiales. La rotation de la roue peut être freinée ou bloquée par des moyens de freinage, comme un frein (26) à tambour.

Dans ce mode de réalisation, une fonction motrice est assurée par un moteur hydraulique (29) d'un type connu, monté sur la fusée (25) de roue et entraînant la jante en rotation. Ce moteur hydraulique est alimenté en fluide sous pression à travers des conduites souples (non représentés) en provenance d'un circuit hydraulique mis sous pression par des moyens connus. D'autres types de moteurs ou motoréducteurs peuvent être utilisés, comme des moteurs pneumatiques ou électriques montés directement à l'intérieur de chaque module de roue. En effet, de tels moteurs hydrauliques, pneumatiques ou électriques sont particulièrement avantageux du fait de leur faible encombrement. De même, ils sont faciles à commander à distance et leur raccordement en énergie peut facilement se faire de façon souple, par des conduites souples ou câbles électriques. Ces aspects simplifient grandement leur intégration à l'intérieur d'un tel module par rapport à une transmission mécanique depuis un moteur centralisé.

Une fonction directrice est assurée par une rotation de la fusée (25) de roue par rapport à une fusée (24) fixe, autour d'un axe (d2) de direction sensiblement vertical. Cette rotation est guidée par pivotement de la fusée (25) de roue autour de deux paliers lisses comprenant une pièce (241, 242) de pivot et des coussinets (241a, 242a) cylindriques antifrictionnels. Lors de cette rotation, la fusée de roue supporte la fusée fixe, par exemple par l'intermédiaire d'un coussinet (242b) antifrictionnel en un disque annulaire horizontal centré sur ce même axe (d2).

Cette rotation permettant la fonction directrice est commandée par un effort exercé sur une partie (251) de la fusée (25) de roue n'incluant pas l'axe (d2) de direction. Cet effort est appliqué par une biellette (32) de direction par l'intermédiaire d'une rotule (322) de fusée de type connu, apte à transmettre des efforts passant par un point constituant son centre de rotation tout en laissant libres toutes les rotations. Du côté opposé à la roue, la biellette (32) de direction est reliée à une première partie d'un bras (33) de direction par une rotule similaire, dite rotule (321) de bras. La première partie de ce bras (33) de direction est sensiblement parallèle au plan de rotation de la roue, et est reliée au châssis (1) par une liaison pivot autour d'un maneton (331) d'axe sensiblement vertical. En commandant la position angulaire de ce bras de direction autour de son axe (331) de rotation, on commande donc la position angulaire de la fusée (25) de roue autour de son axe (d2) de direction.

Pour commander la position angulaire de ce module (2) de roue, le bras (33) de direction peut être relié à un actionneur d'un type connu, comme un vérin (34), fixé au châssis (1). Le bras (33) de direction peut comporter une deuxième partie sensiblement orthogonale à sa première partie. Le vérin (34) peut alors être positionné sensiblement selon l'axe du châssis (1), et agir sur le bras de direction à travers sa deuxième partie par une liaison pivot d'axe sensiblement vertical, par exemple un maneton (334).

Pour coupler la position angulaire de ce bras (33) de direction avec celle d'un autre module de roue, une barre (31) de direction peut être reliée par une liaison pivot ou rotule (311) à ce même bras de direction, par exemple entre son axe (331) de rotation et le point (321) de fixation de la biellette (32) de direction. Si la barre de direction est reliée de la même façon avec le bras de direction d'un autre module de roue similaire, les fonctions directrices de ces deux modules de roues fonctionneront alors de façon coordonnée.

Dans ce mode de réalisation, une fonction de suspension est réalisée par un ensemble d'éléments dont une section verticale forme un parallélogramme déformable. Ce parallélogramme comprend deux côtés sensiblement verticaux et parallèles entre eux, comprenant d'un côté la fusée (24) fixe et de l'autre côté une chape (21) fixée au châssis. Les deux autres côtés de ce parallélogramme sont constitués par deux bras (22, 23) de suspension sensiblement parallèles entre eux, l'un en bas et l'autre en haut, et dont la position angulaire varie avec le mouvement de la suspension. Ces bras de suspension sont articulés à ces deux premiers côtés, par des liaisons pivots selon des axes sensiblement horizontaux et parallèles entre eux. Le bras (22) inférieur de suspension est ainsi articulé à une de ses extrémités sur le bas de la chape (21) et à son autre extrémité sur le bas de la fusée (24) fixe, par exemple par pivotement autour de deux alignements de deux manetons (221 a, 221b, respectivement 222a, 222b). De la même façon, le bras (23) supérieur de suspension est articulé à une de ses extrémités sur le haut de la chape (21) et à son autre extrémité sur le haut de la fusée (24) fixe, par exemple par pivotement autour de deux alignements de deux manetons (231 a, 231b, respectivement 232a, 232b). Chaque bras (22, 23) de suspension comprend lui-même deux barres parallèles solidarisées entre elles par une partie (229, 239) horizontale. A chacune de leurs extrémités, ces barres présentent un perçage qui reçoit le maneton participant à la liaison pivot. Dans la position supérieure de la suspension, cette partie horizontale reliant les deux barres du bras supérieur peut venir en contact avec une partie (219) saillante solidaire de la chape (1), réalisant ainsi une butée haute comportant des moyens élastiques et/ou d'amortissement.

Le mouvement de la suspension, c'est à dire la déformation verticale de ce parallélogramme, est contrôlé par la variation de longueur d'un élément télescopique, dit jambe (214) de suspension. Pour cela, cette jambe de suspension est fixée à son extrémité basse à la fusée (24) fixe et à son extrémité haute à la chape (21). Cette fixation se fait par des liaisons pivots d'axes sensiblement horizontaux, par exemple par des manetons munis de coussinets anti-frictionnels.

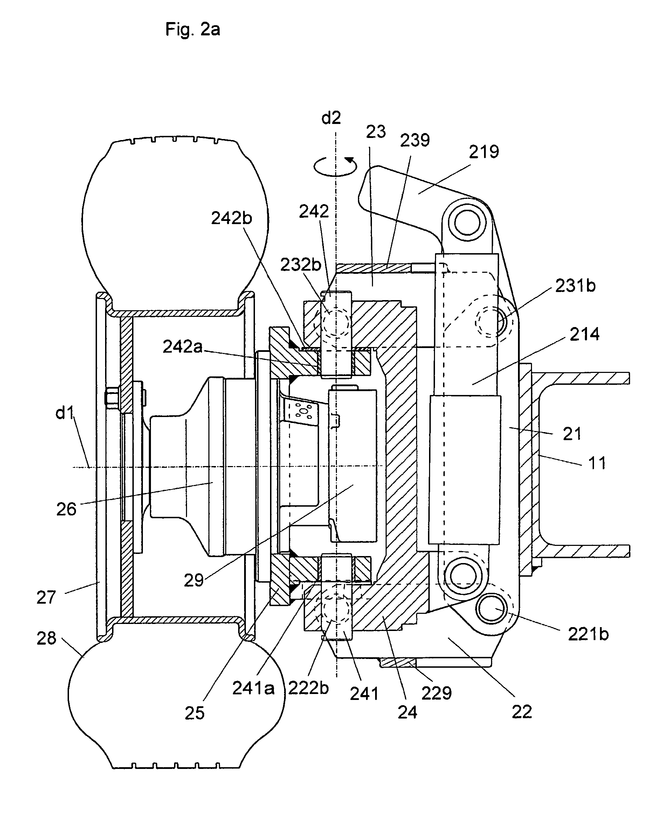

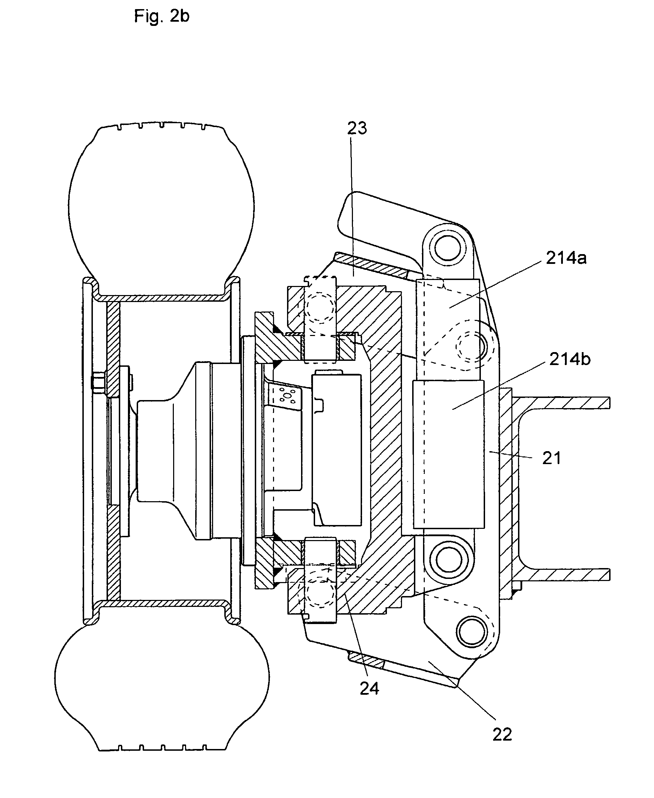

Ainsi qu'on le voit en passant de la figure 2a à la figure 2b, le soulèvement de la roue est autorisé par un pivotement des deux bras (22, 23), ce qui va avec un raccourcissement de la jambe de suspension. Ce raccourcissement se fait alors par pénétration d'une partie (214a) supérieure de la jambe dans une partie (214b) inférieure de cette même jambe.

La jambe de suspension comprend un ou plusieurs actionneurs, par exemple des vérins hydrauliques, dont l'action permet de contrôler la déformation de la suspension. Ce contrôle peut correspondre à plusieurs effets. Un effet peut être de transmettre une partie de la charge du châssis à la roue, en limitant la déformation de la suspension. Un autre effet peut être d'amortir les oscillations du châssis par rapport à la roue en amortissant la déformation de la suspension. Un autre effet peut être de modifier ou d'ajuster la hauteur du châssis par rapport à la roue, en réglant la longueur de la jambe (214) de suspension. Ce contrôle de la suspension peut être avantageusement réalisé par l'action d'un fluide sous pression. Il est en effet courant de disposer d'un groupe de pression hydraulique sur les engins de chantiers ou de manutention, ce groupe étant utilisé pour manoeuvrer divers appendices de manutention ou pour contrôler certaines fonctions de l'engin.

Dans une variante ou la jambe (214) de suspension est indépendante du reste du véhicule, cette jambe comprend des moyens élastiques (non représentés) d'un type connu lui permettant ainsi de transmettre à la fusée (24) fixe la charge de la chape (21), et donc une part de la charge du châssis (1). Selon les applications, cette jambe (214) de suspension peut également comporter des moyens d'amortissement, par exemple un amortisseur hydraulique ou à gaz, lui permettant d'amortir les variations de position de la suspension et de diminuer les oscillations du véhicule.

Dans les modes de réalisation qui conjuguent une fonction directrice et une fonction de suspension, la biellette (32) de direction peut suivre sans détérioration les déformations de la suspension par pivotement de ses rotules (321, 322) suivant des axes horizontaux. Pour éviter de trop fortes contraintes de traction ou compression sur cette biellette, ou leur influence sur la commande de direction, les points de pivotements de ces mêmes rotules sont disposés à proximité des axes de pivotement des articulations de l'un des bras de suspension, par exemple les articulations (221, 222) du bras (22) inférieur de suspension.

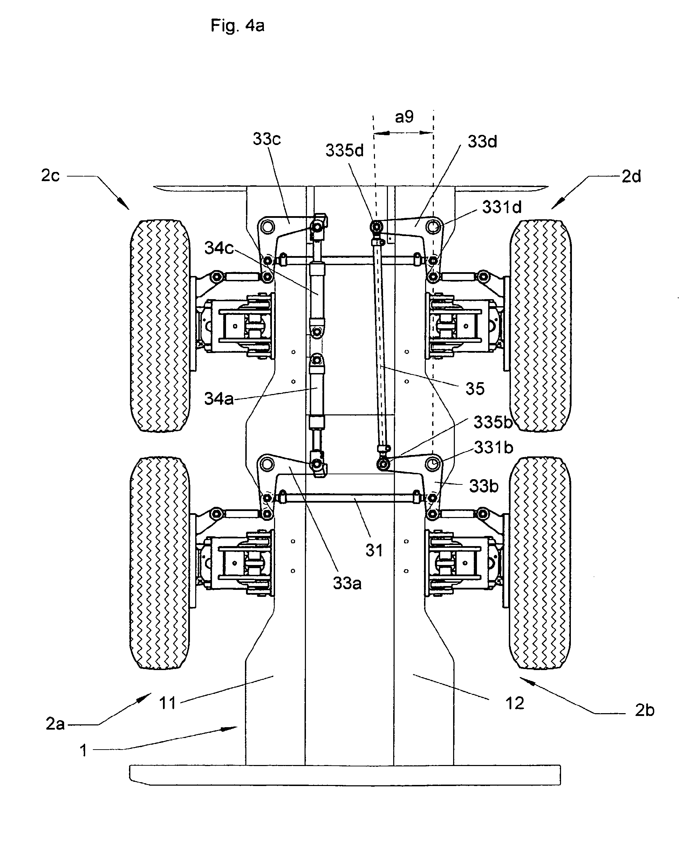

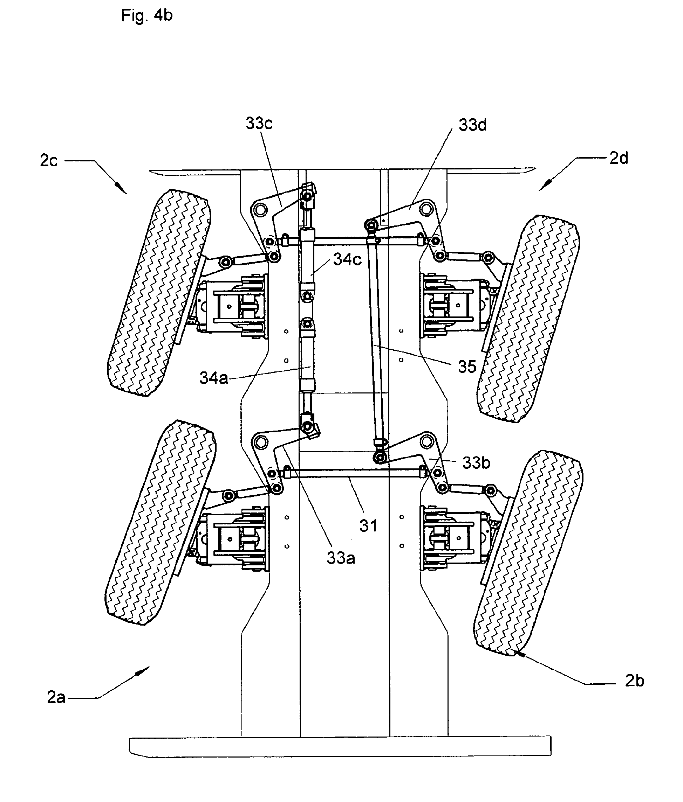

Dans un mode de réalisation représenté en figures 4a et 4b, le module de roue selon l'invention est utilisé pour réaliser deux trains de roues associés sur un même châssis. Un premier module (2a) de roue est ainsi appairé avec un deuxième module (2b) de roue pour former un premier train de roues. Un troisième module (2c) est lui appairé avec un quatrième module (2d) de roue pour former un deuxième train de roues.

Dans chaque train de roue, les deux modules sont couplés en direction par une barre de direction comme décrit plus haut.

La commande en direction de chacun des deux trains est réalisée par deux vérins (34a, 34c) comme décrit plus haut. Les deux trains peuvent également être couplés en direction, en reliant par un timon (35) de direction, un bras de direction d'un train avec un bras de direction de l'autre train.

Ainsi qu'on le voit en passant de la figure 4a à la figure 4b, le braquage est obtenu par une rétractation du vérin (34a) commandant un module (2a) de l'un des trains de roues, et par un allongement du vérin (34c) commandant un module (3C) de l'autre train de roues. Cette action provoque un pivotement des bras (33a, 33c) de direction des modules correspondant. Ce pivotement de chaque bras de direction commandé entraîne le pivotement simultané du bras (33b, 33d) de direction de l'autre module (2b, respectivement 2d) de chaque train. Le pivotement du bras de direction de chaque module provoque alors le braquage de la roue de chaque module.

Le timon (35) de direction peut par exemple être sensiblement dans l'axe du châssis et relier les modules de roues situés d'un même côté du châssis. Ce timon de direction est alors relié par une liaison (335b, 335d) pivot, d'axe vertical, à la deuxième partie du bras de direction de chacun de ces deux modules (2b, 2d) de roues. Les deux vérins (34a, 34c) sont alors également en position longitudinale, fixés sur une partie du châssis (1) située entre les deux trains, et commandent les deux modules (2a, 2c) situés du côté opposé au timon (35) de direction. Ces deux vérins peuvent alors être reliés par une liaison (334a, 334c) pivot, d'axe vertical, à la deuxième partie du bras de direction de chacun de ces deux modules (2a, 2c) de roues.

Un tel couplage de deux trains de roues peut permettre par exemple d'assurer une bonne coordination de leurs positions, ou pallier à des défaillances ou imprécisions des vérins. Un tel couplage entre deux trains peut également renforcer l'action de chaque vérin par une transmission de l'effort de l'autre vérin, ou permettre l'utilisation de vérins à simple effet ou d'un seul vérin à double effet.

Lors du braquage d'un train directeur comportant deux modules de roue opposés, les roues des deux modules pivotent de façon coordonnées pour que leurs axes de roues ne soient pas parallèles. La géométrie, ou épure, d'un tel train est calculée de façon connue de manière à ce quel les roues soient parallèles entre elles lors d'un braquage nul, et que leurs axes se rencontrent en un point, dit centre de braquage, situé à l'intérieur du virage. Ainsi, lors du virage, chaque roue roule sur le sol suivant une trajectoire concentrique au centre de virage à chaque instant, ce qui évite des efforts latéraux sur les pneumatiques pouvant être causes d'usure supplémentaire ou d'imprécisions dans la direction.

Cette géométrie est calculée pour chaque train et fournit des valeurs de longueurs de biellettes (32) de direction en fonction de la position souhaitée pour le centre de braquage. Ces valeurs sont déterminées de façon à ce qu'un plan (d8) de commande de direction passant à la fois par l'axe (d2) de pivotement de la fusée (25) de roue et par le centre de la rotule (322) commandant le pivotement forme un angle déterminé, dit angle (a8), de commande de direction avec le plan de roulement de la roue.

Lorsque deux trains de roues directeurs sont ainsi montés sur un même châssis, les longueurs des biellettes de direction des modules (2c, 2d) du deuxième train et la géométrie du timon de direction sont déterminés pour que le centre de braquage du deuxième train soit le même que le centre de braquage du premier train. Cette géométrie est déterminée en particulier en fixant l'angle (a9) que forme avec l'axe (d0) du châssis avec une droite (d9) passant par le centre des manetons (335b, 335d) reliant le timon de direction au bras de direction d'un module (2b, 2d) de chacun des deux trains de roues.

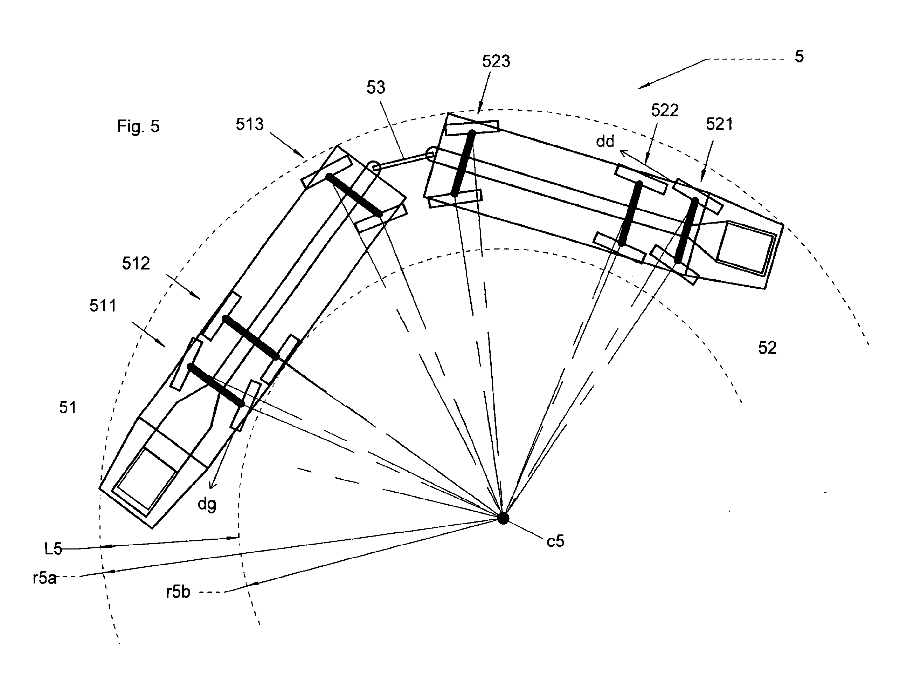

Dans un mode de réalisation représenté en figure 5, un véhicule (5) selon l'invention comprend deux demi-véhicules (51, 52) opposés, articulés entre eux par exemple par un timon (53), et munis chacun d'une cabine (510, 520) de conduite. Chacun de ces demi-véhicules (51, 52) comprend un châssis monté sur trois trains (511, 512, 513 respectivement 521, 522, 523) de roues comprenant chacun deux modules de roues selon l'invention. Le véhicule peut être conduit depuis n'importe laquelle des deux cabines, en fonction des besoins et du sens de déplacement. La conduite peut également se faire depuis les deux cabines en même temps, par exemple dans le cas de manoeuvres complexes ou délicates, chaque cabine commandant alors les trains de roues qu'elle comporte.

Les six trains de roue sont composés de modules de roues comportant une fonction de suspension et une fonction directrice. Au moins un des six trains de roues comporte une fonction motrice, de préférence sur ses deux roues.

Pour chaque demi-véhicule, chacun de ces trains (511, 512, 513, respectivement 521, 522, 523) directeurs est réalisé selon une épure lui assurant un braquage où les axes de ses roues se croisent en un même centre de braquage. Les deux demi-véhicules étant articulés entre eux, leurs centres de braquage peuvent être superposés en un même point (c5). Cette superposition des centres de braquage des deux cabines peut être assurée par une coordination électronique du braquage des trains directeurs des deux demi-véhicules. L'une des deux cabines commande alors elle-même ses trains directeurs, par exemple par commande mécanique et hydraulique, tandis que les trains directeurs de l'autre cabine fonctionnent dans un mode dit auto-directeur. C'est à dire que le braquage de ces trains auto-directeurs est calculé au fur et à mesure de façon à maintenir leur centre de braquage sur celui des trains du demi-véhicule dirigeant, ou en fonction d'autres critères de trajectoire, par exemple par des moyens d'asservissement utilisant des capteurs ou codeurs.Le braquage de l'ensemble de ces trains permet d'obtenir un rayon de braquage particulièrement court. La coordination de ces braquages permet également de maintenir l'ensemble du véhicule sur une trajectoire dite « mono-trace », c'est à dire où les différents éléments du véhicule empruntent sensiblement la même trajectoire. Cette trajectoire mono-trace permet alors de faire circuler l'ensemble du véhicule dans un espace, par exemple un tunnel, d'une largeur minimale (L), compris entre un rayon d'encombrement extérieur (r5a) et un rayon d'encombrement intérieur (r5b).

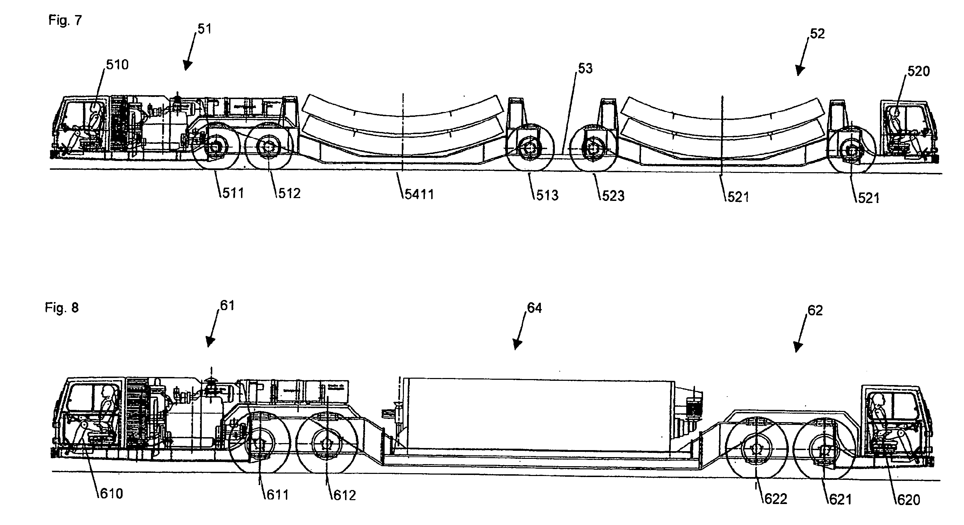

Dans un mode de réalisation illustré en figure 7 et pouvant fonctionner comme illustré en figure 5, l'un (51) des deux demi-véhicules comprend les systèmes d'énergie, l'autre (52) utilisant les systèmes porté par le premier et ne comportant que deux trains (521, 522) de roues. Chacun des demi-véhicules (51, 52) comporte un plateau de charge (541, 542) apte à recevoir diverses objets, engins, ou éléments préfabriqués, tels que des voussoirs de tunnel en béton. A titre d'exemple, une réalisation d'un véhicule selon l'invention peut porter une charge de l'ordre de deux fois 20 tonnes, pour une largeur de l'ordre de 2 m et une hauteur de l'ordre de 1,80 m.

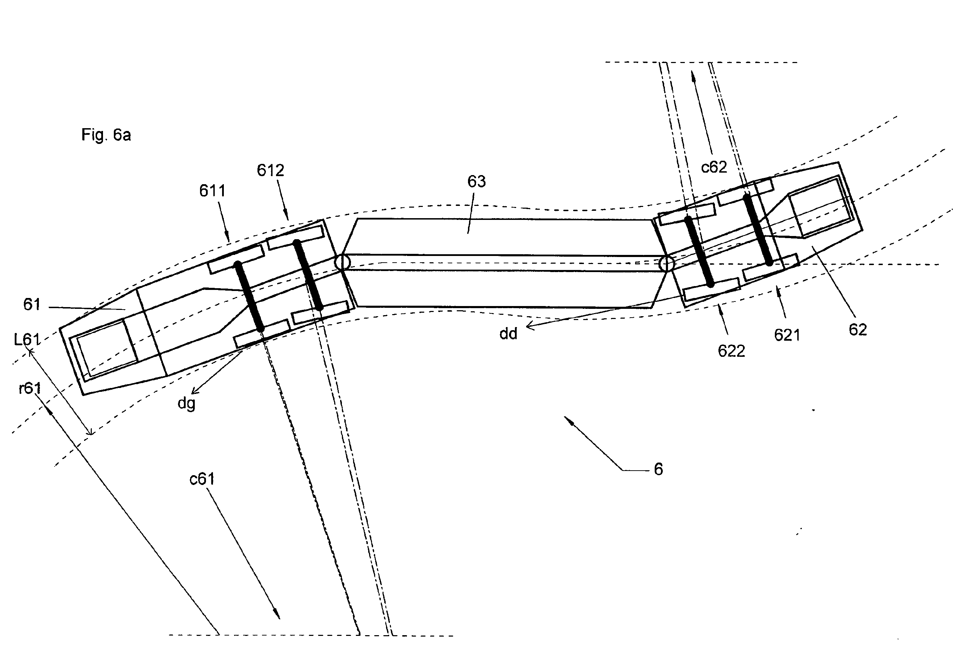

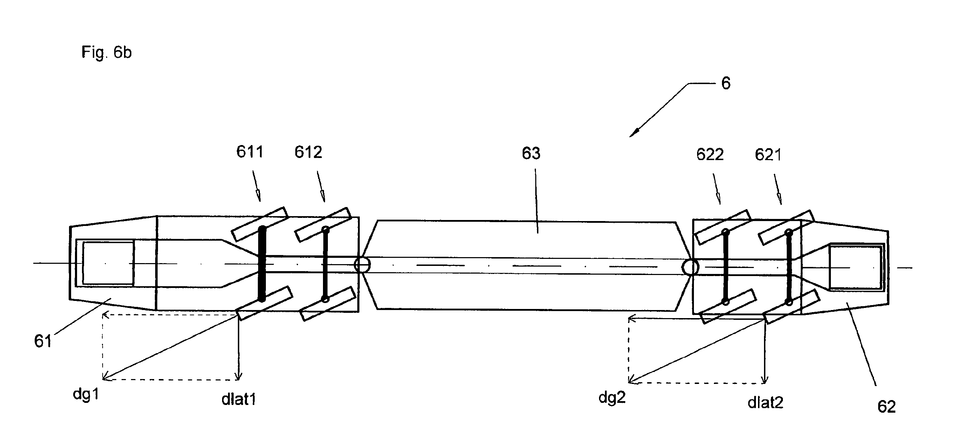

Dans un mode de réalisation représenté en figures 6a et 6b, un véhicule (6) selon l'invention comprend deux demi-véhicules tracteurs (61, 62) de conduite opposées supportant les deux extrémités d'une structure (63) centrale porte-charge, à travers des liaisons articulées pivotant autour d'axes sensiblement verticaux. Chacun de ces demi-véhicules (61, 62) comprend une cabine de commande (610, 620) et un châssis monté sur deux trains (611, 612, respectivement 621, 622) de roues comprenant chacun deux modules de roues selon l'invention. Le véhicule peut être conduit depuis n'importe laquelle des deux cabines, en fonction des besoins et du sens de déplacement. La conduite peut également se faire depuis les deux cabines en même temps, chaque cabine commandant alors les trains de roues qu'elle comporte.

Les quatre trains de roue sont composés de modules de roues comportant une fonction de suspension. Au moins un des quatre trains de roues comporte une fonction motrice, de préférence sur ses deux roues. L'ensemble des trains de roues comportent une fonction directrice.

Dans une variante illustrée en figure 6a, les trains (611, 612, respectivement 621, 622) de roues de chacune des deux cabines (61, respectivement 62) sont couplés entre eux comme décrit plus haut pour pouvoir braquer selon un même centre (c61, respectivement c62) de braquage pour chacune des cabines. Le fait de pouvoir braquer les trains de chaque cabine indépendamment l'une de l'autre permet ainsi de faire suivre au véhicule une trajectoire monotrace, située à l'intérieur d'un couloir de largeur (L61) peu supérieure à la largeur du véhicule lui-même. Du fait des articulations multiples du véhicule, cette trajectoire peut présenter des changements de direction peu espacés par rapport à la longueur totale du véhicule. Ainsi qu'illustré sur la figure 6a, il peut par exemple être possible d'entrer avec l'avant (61) du véhicule dans une courbe vers la gauche (de centre c61) alors que l'arrière (62) du véhicule est encore dans une courbe vers la droite (de centre c62). Cette trajectoire mono-trace serrée permet alors au véhicule muni de tels modules de roues d'emprunter des chemins ou des passages particulièrement étroits ou sinueux, par exemple des tunnels.

Dans une situation de virage simple (non représentée), le fait de braquer les trains des deux cabines en même temps, selon une rotation dans des sens opposés, permet également au véhicule de réaliser un virage selon un rayon de braquage particulièrement court. Selon une variante, le braquage des trains de chacune des deux cabines peut être commandé depuis la cabine correspondante, ce qui permet à l'opérateur d'être en bonne position pour apprécier les distances ou éviter les obstacles. Selon une autre variante, l'ensemble du véhicule peut être conduit depuis une seule cabine, dite cabine menante. Les trains d'une des cabines, par exemple la cabine menante, sont alors commandés directement, alors que les trains de l'autre cabine fonctionnent en mode auto-directeur. C'est à dire que le braquage de ces trains auto-directeurs est calculé au fur et à mesure de façon à maintenir leur centre de braquage sur celui des trains du demi-véhicule dirigeant, ou en fonction d'autres critères de trajectoire, par exemple par des moyens d'asservissement utilisant des capteurs ou codeurs.

Dans une variante illustrée en figure 6b, les trains de chacune des cabines sont couplés entre eux soit par un timon de direction comme décrit plus haut, soit par des moyens d'asservissement commandés de façon électronique ou informatique.

Le fait de braquer les trains de roues des deux cabines en même temps, mais selon une rotation de même sens, permet d'obtenir une position braquée dans le même sens pour toutes les roues du véhicule. Il est alors possible de faire avancer le véhicule « en crabe », c'est à dire en faisant avancer l'ensemble des éléments (61, 62, 63) du véhicule de façon uniforme, selon une direction différente de l'axe d'alignement de ces éléments.

Dans le cas où le couplage des trains entre eux est réglable ou bien s'effectue par un asservissement, il peut être alors avantageux de découpler les différents trains entre eux. Un tel découplage permet alors de maintenir les roues d'un train parallèles à celles d'un autre, donc sans avoir de centres de braquage communs. Un tel découplage permet également de braquer différemment les différents trains d'une même cabine, ce qui ajoute des possibilités de trajectoires et de déplacements.

Dans une variante (non représentée), les biellettes de direction ont une longueur réglable par un dispositif réglable par l'usager. Lors d'un déplacement en crabe, il est alors possible de maintenir les roues d'un même train parallèles entre elles, et donc sans aucun centre de braquage.

Il doit être bien compris que cette position de déplacement en crabe n'est qu'un exemple des configurations et trajectoires que peut adopter un véhicule selon l'invention. En effet, le fait de pouvoir braquer chaque train de roues de façon indépendante des autres permet de réaliser une infinité de trajectoires sans sortir de l'esprit de l'invention.

Dans un mode de réalisation illustré en figure 8, l'un (61) des deux demi-véhicules tracteurs comprend les systèmes d'énergie, l'autre (62) utilisant les systèmes porté par le premier. Chacun des demi-véhicules (61, 62) comporte une articulation qui supporte une extrémité d'un plateau (64) de charge apte à recevoir diverses objets, engins, ou éléments préfabriqués, tels qu'une benne de transport de mortier de béton. A titre d'exemple, une réalisation d'un véhicule selon l'invention peut porter une charge de l'ordre de 25 tonnes, pour une largeur de l'ordre de 2 m et une hauteur de l'ordre de 1,80 m.

Il doit être bien compris que les modes de couplage ou de découplage des différents trains de roues décrits plus haut ne sont pas dépendants du nombre et de la répartition des éléments qui constituent le véhicule. Ainsi, l'aspect modulaire du module de roue selon l'invention fait qu'il est tout à fait possible de prévoir un découplage et un déplacement en crabe sur le véhicule illustré en figure 5, ou tout autre combinaison des variantes décrites ici, sans sortir de l'esprit de l'invention.

Il doit également être bien compris qu'un module de roue selon l'invention peut comporter une quelconque combinaison des fonctions ici décrites sans sortir de l'esprit de l'invention. Un module peut ainsi comporter par exemple une fonction de suspension sans fonction directrice, aussi bien qu'une fonction directrice sans fonction de suspension. Les fonctions motrices et de freinage peuvent également être réalisées ou non sur n'importe lequel des modules utilisés pour un engin ou véhicule.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Module de liaison au sol supportant tout ou partie d'un châssis (1) de véhicule ou engin spécial de chantier ou de manutention, ce module (2) comprenant une ou plusieurs roues permettant le déplacement de tout ou partie de ce véhicule, au moins une de ces roues supportant une part du châssis par des moyens de liaison au sol commandés, disposés sur au moins un côté du châssis, occupant un volume (20) qui ne s'étend pas jusqu'à la partie (10) médiane du châssis selon l'axe (d1) de la roue et comportant la possibilité d'un déplacement de l'axe (d1) de la roue par rapport au châssis (1), **caractérisé en ce que** le module de liaison au sol dispose des moyens de suspension assurant le déplacement de l'axe (d1) de la roue par rapport au châssis (1) indépendamment :
- de la position ou de l'état des roues ou moyens de liaison au sol supportant ledit châssis et situés à l'extérieur de ce module (2), et
- du déplacement de l'axe des roues des autres modules par rapport au châssis.

2. Module selon l'une des revendications précédentes, **caractérisé en ce que** la roue est montée par une liaison pivot sur une fusée, dite fusée (25) de roue, cette fusée (25) de roue étant mobile en rotation par rapport au châssis selon un axe (d2) de direction formant avec la surface où s'appuie la roue un angle supérieur à 45 DEG, la rotation de la fusée (25) de roue autour de cet axe de direction étant commandée par déplacement d'un élément, dit biellette (32) de direction, relié à la fusée de roue en un point décalé d'une certaine distance par rapport à l'axe (d2) de direction, cette rotation permettant au module d'assurer une fonction directrice.

3. Module selon l'une des revendications précédentes, **caractérisé en ce que** la fusée (25) de roue est reliée au châssis (1) par l'intermédiaire d'une structure déformable, dite structure de suspension, apte à se déformer dans une direction verticale, ou perpendiculaire à la face du châssis portant le module, cette déformation se faisant selon la cinématique d'un parallélogramme de côtés rigides et de sommets d'angles variables, la biellette (32) de direction étant reliée à ses deux extrémités par des liaisons rotules lui permettant de rester sensiblement parallèle à l'un des côtés du parallélogramme.

4. Module selon l'une des revendications précédentes, **caractérisé en ce que** la déformation de la structure déformable est commandée par la variation de longueur d'une jambe (214, 241') de suspension reliée à ses deux extrémités à deux éléments (21, 24) formant des côtés opposés du parallélogramme de déformation de cette structure déformable, cette jambe de suspension réalisant un contrôle de la hauteur de la suspension sous l'action éventuellement partielle d'un circuit de fluide sous pression.

5. Module selon l'une des revendications précédentes, **caractérisé en ce que** la jambe de suspension réalise une fonction d'amortissement, de maintien de la hauteur, ou de réglage de la hauteur, ou une combinaison de ces fonctions.

6. Module selon l'une des revendications précédentes, **caractérisé en ce qu'**il comprend un moteur entraînant en rotation la roue par rapport à la fusée (25) de roue autour de l'axe (d1) de roue.

7. Module selon l'une des revendications précédentes, **caractérisé en ce que** le moteur fonctionne sous l'action d'un fluide sous pression ou d'un courant électrique.

8. Véhicule en une ou plusieurs parties et comportant au moins un train de roues directrices composé d'au moins deux modules selon l'une des revendications précédentes, ces deux modules étant disposés de chaque côté du châssis et incluant une fonction directrice avec, dans au moins un des modules, un plan (d0) de roulement de la roue formant un angle, dit angle (a8) de commande de direction avec un plan (d8) de commande de direction, ce plan (d8) passant par l'axe (d2) de direction et le centre de rotation de la liaison (322) rotule reliant la fusée (25) de roue et la biellette (32) de direction, cet angle (a8) de commande de direction étant choisi pour que, lors du braquage d'un train, les axes (d1) des roues des modules d'un même train définissent un point déterminé, dit centre (c5, c6) de braquage, par l'intersection de leur projection verticale sur le sol.

9. Véhicule selon la revendication 8, **caractérisé en ce qu'**au moins un module d'un train comporte une biellette (32) de direction reliée du côté du châssis à une extrémité d'un bras (33) de direction, ce bras de direction étant relié au châssis (1) par une liaison pivot (331) et étant commandé en rotation par un actionneur, le train comportant au moins une barre (31) de direction reliant le bras (33) de direction ou la biellette (33) de direction d'un module avec le bras de direction ou la biellette de direction d'un autre module du même train.

10. Véhicule selon la revendication 11, **caractérisé en ce qu'**au moins un bras (33) de direction présente une forme en «L », l'intersection des branches supportant la liaison (331) au châssis (1), l'une des branches étant reliée à la biellette (32) de direction et à la barre (31) de direction, l'autre branche étant reliée à l'actionneur cet actionneur comprenant un vérin (34) formant avec l'axe longitudinal du châssis (1) un angle inférieur à 45 DEG.

11. Véhicule selon l'une des revendications 8 à 9, **caractérisé en ce qu'**il comporte plusieurs modules de roues directrices, au moins un de ces modules, dit autodirecteur, étant commandé en direction par un actionneur associé à des moyens de calcul et de commande aptes à coordonner le braquage de ce train en fonction de celui des autres trains du véhicule.

12. Véhicule selon la revendication 10, **caractérisé en ce qu'**il comporte au moins un train autodirecteur dont le braquage est déterminé par les moyens de calcul et de commande de façon à ce que son centre (c5, c6) de braquage soit sensiblement superposé à celui d'au moins un autre train de roues directrices du véhicule.

13. Véhicule selon l'une des revendications 8 à 12, **caractérisé en ce qu'**il comporte en une de ses extrémités au moins deux trains de roues directrices, une extrémité du bras (33) de direction d'un module (2b) étant reliée avec une extrémité du bras de direction d'un module (2d) d'un autre train par un timon (35) de direction, cette liaison assurant une coordination du braquage des deux trains.

14. Véhicule selon la revendication 13, **caractérisé en ce que** le timon (35) de direction est relié aux bras (33b, 33d) de direction d'un module (2b, respectivement 2d) de chaque train en deux points (335b, respectivement 335d) définissant une droite formant un angle (a9) déterminé avec un plan incluant les axes des liaisons (331b, respectivement 331d) pivots reliant ces deux bras de direction au châssis (1), la valeur de cet angle (a9) pouvant être choisie pour que les centres de braquage des deux trains soient sensiblement superposés.

15. Véhicule selon l'une des revendications 8 à 14, **caractérisé en ce que** le bras (33a) de direction d'au moins un module (2a, respectivement 2c) de chaque train est commandé par un actionneur (34a, respectivement 34c).

16. Véhicule selon l'une des revendications 8 à 15, **caractérisé en ce qu'**il présente une forme allongée et comporte au moins deux trains (511, 512, respectivement 521, 522) de roues directrices situés de chaque côté du centre de gravité du véhicule, le braquage de ces trains étant commandé et coordonné par des moyens de commande de façon à ce que les directions (dg, dd) imprimées au châssis par ces deux trains soient dirigées de deux côtés opposés du châssis, cette coordination de braquage de ces trains permettant ainsi un braquage du véhicule selon un faible rayon (r5, r6) de braquage.

17. Véhicule selon l'une des revendications 8 à 16, **caractérisé en ce qu'**il présente une forme allongée et comporte au moins deux trains (611, 612, respectivement 621, 622) de roues directrices situés de chaque côté du centre de gravité du véhicule, le braquage de ces trains étant commandé et coordonné par des moyens de commande de façon à ce que les directions (dg1, dg2) imprimées au châssis par ces deux trains soient dirigées du même côté du châssis, cette coordination de braquage de ces trains permettant ainsi un déplacement de l'ensemble du véhicule « en crabe », c'est à dire dans une direction (dg1, dg2) incluant une composante (dlat1, dlat2) latérale par rapport au véhicule.

18. Véhicule selon l'une des revendications 8 à 17, **caractérisé en ce qu'**il comporte au moins deux cabines (510, 520, respectivement 610, 620) ou postes de commandes, chacune de ces cabines comportant des moyens de commande de l'ensemble des modules de roues du véhicule.

19. Véhicule selon l'une des revendications 8 à 17, **caractérisé en ce qu'**il comporte au moins deux cabines ou postes de commandes, chacune de ces cabines étant apte à commander séparément une partie des modules ou trains de roues du véhicule.

20. Véhicule selon l'une des revendications 8 à 19, **caractérisé en ce qu'**il comporte deux demi-véhicules (51, 52) dos à dos, articulés entre eux directement ou par l'intermédiaire d'un timon (53), chaque demi-véhicule comportant un plateau (541, respectivement 542) de charge, dont la surface de charge est située au-dessous de l'axe (d1) des roues, et une cabine (510, respectivement 520) de commande et étant supportée par au moins un train (511, 512, respectivement 521, 522) de roues directrices du côté de sa cabine et par au moins un train de roues non directrices (513, respectivement 523) du côté de l'articulation.

21. Véhicule selon l'une des revendications 8 à 20, **caractérisé en ce qu'**il comporte deux demi-véhicules tracteur (61, 62) dos à dos et supportant chacun une extrémité d'une partie de charge (64) par une articulation, chaque demi-véhicule comportant une partie (541, respectivement 542) de plateau de charge, dont la surface de charge est située au-dessous de l'axe (d1) des roues, et une cabine (510, respectivement 520) de commande et étant supporté par au moins un train (511, 512, respectivement 521, 522) de roues directrices et au moins un train de roues non directrices (513, respectivement 523).

## Claims

1. Ground contact module supporting all or part of a chassis (1) of a vehicle or special engine for transport or mechanical handling, this module (2) comprising one or a plurality of wheels permitting the displacement of all or part of this vehicle, at least one of these wheels supporting a part of the chassis by controlled ground contact means disposed on at least side of the chassis, occupying a volume (20) which does not extend as far as the central part (10) along the axis (d1) of the wheel and including the possibility of displacement of the axis (d1) of the wheel with respect to the chassis (1), **characterised in that** the ground contact module has suspension means which ensure the displacement of the axis (d1) of the wheel with respect to the chassis (1) independently of:
- the position or the state of the wheels or ground contact means supporting the said chassis and situated outside this module (2), and
- the displacement of the axis of the wheels of the other modules with respect to the chassis.

2. Module as claimed in any one of the preceding claims, **characterised in that** the wheel is mounted by a pivot coupling on a stub axle, referred to as a wheel stub axle (25), this wheel stub axle (25) being movable in rotation with respect to the chassis along a steering axis (d2) which forms an angle greater than 45° with the surface on which the wheel is supported, the rotation of the wheel stub axle (25) about this steering axis being controlled by displacement of an element, referred to as a tie rod (32) connected to the wheel stub axle at a point offset by a certain distance with respect to the steering axis (d2), this rotation enabling the module to ensure a steering function.

3. Module as claimed in any one of the preceding claims, **characterised in that** the wheel stub axle (25) is connected to the chassis (1) by way of a deformable structure, referred to as a suspension structure, which is capable of being deformed in a vertical or perpendicular direction with respect to the face of the chassis bearing the module, this deformation taking place according to the kinematics of a parallelogram with rigid sides and variable angles, the tie rod (32) being connected at its two ends by swivel joints which enable it to remain substantially parallel to one of the sides of the parallelogram.

4. Module as claimed in any one of the preceding claims, **characterised in that** the deformation of the deformable structure is controlled by the variation in length of a MacPherson strut (214, 241') connected at its two ends to two elements (21, 24) which form opposite sides of the deformation parallelogram of this deformable structure, this MacPherson strut providing monitoring of the height of the suspension under the action, possibly partial, of a fluid circuit under pressure.

5. Module as claimed in any one of the preceding claims, **characterised in that** the MacPherson strut provides a function of shock absorption, maintenance of the height, or adjustment of the height, or a combination of these functions.

6. Module as claimed in any one of the preceding claims, **characterised in that** it comprises a motor which drives the wheel in rotation with respect to the wheel stub axle (25) about the wheel axis (d1).

7. Module as claimed in any one of the preceding claims, **characterised in that** the motor functions under the action of a fluid under pressure or an electric current.

8. Vehicle in one or several parts and including at least one set of steered wheels composed of at least two modules as claimed in any one of the preceding claims, these two modules being disposed on each side of the chassis and including a steering function with, in at least one of the modules, a running surface (d0) of the wheel forming an angle, referred to as a steering control angle (a8), with a steering control surface (d8), this surface (d8) passing through the steering axis (d2) and the centre of rotation of the swivel joint (322) connecting the wheel stub axle (25) and the tie rod (32), this steering control angle (a8) being chosen so that during steering of a set of wheels the axes (d1) of the wheels of the modules of one and the same set of wheels define a point, referred to as the steering centre c5, c6), determined by the intersection of their vertical projection on the ground.

9. Vehicle as claimed in Claim 8, **characterised in that** at least one module of a set includes a tie rod (32) connected on the chassis side to an end of a steering arm (33), this steering arm being connected to the chassis (1) by a swivel joint (331) and being controlled in rotation by an actuator, the set of wheels including at least one steering bar (31) connecting the steering arm (33) or the tie rod (33) of one module to the steering arm or the tie rod of another module of the same set.

10. Vehicle as claimed in Claim 11, **characterised in that** at least one steering arm (393) has the shape of an L, the intersection of the arms supporting the connection (331) to the chassis, one of the arms being connected to the tie rod (31), the other arm being connected to the actuator, this actuator comprising a jack (34) forming an angle less than 45° with the longitudinal axis of the chassis (1).

11. Vehicle as claimed in any one of Claims 8 to 9, **characterised in that** it includes a plurality of modules of steered wheels, at least one of these modules, referred to as the self-steering means, being controlled in its steering by an actuator associated with calculation and control means capable of co-ordinating the steering of this set of wheels as a function of the steering of the other sets of wheels of the vehicle.

12. Vehicle as claimed in Claim 10, **characterised in that** it includes at least one self-steering set of wheels of which the steering is determined by the calculation and control means in such a way that its steering centre (c5, c6) is substantially superimposed on that of at least one other set of steered wheels of the vehicle.

13. Vehicle as claimed in any one of Claims 8 to 12, **characterised in that** it includes at one of its end at least two sets of steered wheels, one end of the steering arm (33) of a module (2b) being connected to one end of the steering arm of a module (2d) of another set by a steering linkage (35) this connection ensuring a co-ordination of the steering of the two sets of wheels.

14. Vehicle as claimed in Claim 13, **characterised in that** the steering linkage (35) is connected to the steering arms (33b, 33d) of one module (2b, 2d respectively) of each set of wheels at two points (335b, 335d respectively) defining a straight line forming a specific angle (a9) with a plane including the axes of the pivot couplings (331b, 331d respectively) connecting these two steering arms to the chassis (1), wherein the value of this angle (a9) can be chosen so that the steering centres of the two sets of wheels are substantially superimposed.

15. Vehicle as claimed in any one of Claims 8 to 14, **characterised in that** the steering arm (33a) of at least one module (2a, 2c respectively) of each set of wheels is controlled by an actuator (34a, 34c).

16. Vehicle as claimed in any one of Claims 8 to 15, **characterised in that** it has an elongate shape and includes at least two sets (511, 512 and 521, 522 respectively) of steered wheels situated on each side of the centre of gravity of the vehicle, the steering of these sets of wheels being controlled and co-ordinated by control means in such a way that the directions (dg, dd) imposed on the chassis by these two sets are steered from two opposing sides of the chassis, this co-ordination of the steering of these sets thus permitting steering of the vehicle according to a small steering radius (r5, r6).

17. Vehicle as claimed in any one of Claims 8 to 16, **characterised in that** it has an elongate shape and includes at least two sets (611, 612 and 621, 622 respectively) of steered wheels situated on each side of the centre of gravity of the vehicle, the steering of these sets of wheels being controlled and co-ordinated by control means in such a way that the directions (dg1, dg2) imposed on the chassis by these two sets are steered from two opposing sides of the chassis, this co-ordination of the steering of these sets thus permitting a "crabwise" displacement of the whole of the vehicle, that is to say a displacement in a direction (dg1, dg2) including a lateral component (dlat1, dlat2) with respect to the vehicle.

18. Vehicle as claimed in any one of Claims 8 to 17, **characterised in that** it includes at least two cabins (510, 520 and 610, 620 respectively) or control posts, each of these cabins including means for control of the all of the wheel modules of the vehicle.

19. Vehicle as claimed in any one of Claims 8 to 17, **characterised in that** it includes at least two cabins or control posts, each of these cabins being capable of separately controlling some of the modules or sets of wheels of the vehicle.

20. Vehicle as claimed in any one of Claims 8 to 19, **characterised in that** it includes two half-vehicles (51, 52) back to back, articulated to one another directly or by way of a linkage (53), each half-vehicle including a load-bearing platform (541, 542 respectively), of which the load-bearing surface is situated below the axis (d1) of the wheels, and a control cabin (510, 520 respectively), and being supported by at least one set (511, 512 and 521, 522 respectively) of steered wheels on its cabin side and by at least one set of non-steered wheels (513, 523 respectively) on the articulation side.

21. Vehicle as claimed in any one of Claims 8 to 20, **characterised in that** it includes two tractor half-vehicles which are back to back and each support one end of a load-bearing part (64) by an articulation, each half-vehicle including a load-bearing platform part (541, 542 respectively) of which the load-bearing surface is situated below the axis (d1) of the wheels, and a control cabin (510, 520 respectively), and being supported by at least one set (511, 512 and 521, 522 respectively) of steered wheels and at least one set of non-steered wheels (513, 523 respectively).

## Patentansprüche

1. Modul zur Verbindung mit dem Boden, das ganz oder teilweise ein Fahrgestell (1) eines Bau- oder Wartungsfahrzeugs oder einer Bau- oder Wartungsmaschine stützt, wobei dieses Modul (2) ein Rad oder mehrere Räder umfasst, die die Verlagerung dieses Fahrzeugs insgesamt oder teilweise ermöglicht, wobei wenigstens eines dieser Räder einen Teil des Fahrgestells mit Hilfe gesteuerter Mittel zur Verbindung mit dem Boden stützt, die auf wenigstens einer Seite des Fahrgestells angeordnet sind, ein Volumen (20) einnehmen, das sich entlang der Achse (d1) des Rades nicht bis zu dem mittleren Teil (10) des Fahrgestells erstreckt und die Möglichkeit einer Verlagerung der Achse (d1) des Rades bezüglich dem Fahrgestell (1) enthält, **dadurch gekennzeichnet, dass** das Modul zur Verbindung mit dem Boden über Aufhängungsmittel verfügt, die die Verlagerung der Achse (d1) des Rades bezüglich des Fahrgestells (1) gewährleistet, und zwar unabhängig:
- von der Position oder dem Zustand der Räder oder Mittel zur Verbindung mit dem Boden, die das Fahrgestell stützen und außerhalb des Moduls (2) angeordnet sind; und
- von der Verlagerung der Achse der Räder der weiteren Module bezüglich dem Fahrgestell.

2. Modul nach einem der vorherigen Ansprüche, **dadurch gekennzeichnet, dass** das Rad über eine Schwenkverbindung an einem als Radachsschenkel (25) bezeichneten Achsschenkel befestigt ist, wobei dieser Radachsschenkel (25) um eine Richtungsachse (d2), die mit der Oberfläche, auf der das Rad steht, einen Winkel größer 45 Grad bildet, drehbeweglich bezüglich des Fahrgestells ist, wobei die Drehung des Radachsschenkels (25) um diese Richtungsachse durch Verlagerung eines als Lenkhebelstange (32) bezeichneten Elements gesteuert wird, das mit dem Radachsschenkel an einem Punkt verbunden ist, der bezüglich der Richtungsachse (d2) um einen bestimmten Abstand versetzt ist, wobei das Modul durch diese Drehung eine Lenkfunktion gewährleisten kann.

3. Modul nach einem der vorhergehenden Ansprüche, **dadurch gekennzeichnet, dass** die Radachsschenkel (25) mit dem Fahrgestell (1) mit Hilfe einer als Aufhängungsstruktur bezeichneten verformbaren Struktur verbunden ist, die dazu geeignet ist, sich in einer vertikalen Richtung oder senkrecht zu der Seite des Fahrgestells zu verformen, das das Modul trägt, wobei diese Verformung entsprechend der Kinematik eines Parallelogramms mit starren Seiten und Spitzen veränderlicher Winkeln erfolgt, wobei die Lenkhebelstange (32) mit seinen zwei Enden mit Kugelgelenkverbindungen, durch die es im Wesentlichen parallel bleiben kann, mit einer der Seiten des Parallelogramms verbunden ist.

4. Modul nach einem der vorherigen Ansprüche, **dadurch gekennzeichnet, dass** die Verformung der verformbaren Struktur durch die Längenänderung eines Aufhängungsschenkels (214, 214') gesteuert wird, der mit seinen zwei Enden mit zwei Elementen (21, 24) verbunden ist, die gegenüberliegende Seiten des Verformungsparallelogramms dieser verformbaren Struktur bilden, wobei dieser Aufhängungsschenkel eine Steuerung der Höhe der Aufhängung unter der gegebenenfalls teilweisen Wirkung eines Kreislaufs eines mit Druck beaufschlagten Fluids bewerkstelligt wird.

5. Modul nach einem der vorherigen Ansprüche, **dadurch gekennzeichnet, dass** der Aufhängungsschenkel eine Dämpfungs-, Höhenfeststellungs- oder Höhenregelungsfunktion oder eine Kombination aus diesen Funktionen verwirklicht.

6. Modul nach einem der vorherigen Ansprüche, **dadurch gekennzeichnet, dass** es einen Motor umfasst, der das Rad bezüglich des Radachsschenkels (25) um die Radachse (d1) in Drehung versetzt.

7. Modul nach einem der vorherigen Ansprüche, **dadurch gekennzeichnet, dass** der Motor unter der Wirkung eines mit Druck beaufschlagten Fluids oder eines elektrischen Stromes arbeitet.

8. Fahrzeug aus einem Teil oder mehreren Teilen, das wenigstens einen Lenkachssatz umfasst, der aus wenigstens zwei Modulen gemäß einem der vorherigen Ansprüchen aufgebaut ist, wobei diese zwei Module beidseits des Fahrgestells angeordnet sind und eine Lenkfunktion mit einer Rollebene (d0) des Rades in wenigstens einem der Module beinhalten, die einen als Lenksteuerwinkel (a8) bezeichneten Winkel mit einer Lenksteuerebene (d8) einnimmt, in der die Richtungsachse (d2) und der Drehmittelpunkt der Kugelgelenkverbindung (322), die den Radachsschenkel (25) mit der Lenkhebelstange (32) verbindet, liegen, wobei dieser Lenksteuerwinkel (a8) so gewählt ist, dass beim Lenkeinschlag des Achssatzes die Achsen (d1) der Räder der Module eines selben Achssatzes durch den Schnittpunkt ihrer vertikalen Projektion auf den Boden einen bestimmten, als Kurvenzentrum (c5, c6) bezeichneten Punkt definieren.

9. Fahrzeug nach Anspruch 8, **dadurch gekennzeichnet, dass** wenigstens ein Modul eines Achssatzes eine Lenkhebelstange (32) umfasst, die auf der Seite des Fahrgestells mit einem Ende eines Lenkhebels (33) verbunden ist, wobei dieser Lenkhebel durch eine Gelenkverbindung (331) mit dem Fahrgestell (1) verbunden ist und durch einen Aktuator in Drehung versetzt wird, wobei der Achssatz wenigstens eine Richtungsstange (31) umfasst, die den Lenkhebel (33) bzw. die Lenkhebelstange eines Moduls mit dem Lenkhebel bzw. der Lenkhebelstange eines weiteren Moduls desselben Achssatzes verbunden ist.

10. Fahrzeug nach Anspruch 11, **dadurch gekennzeichnet, dass** wenigstens ein Lenkhebel (33) eine L-Form aufweist, wobei der Schnittpunkt der Arme die Verbindung (331) mit dem Fahrgestell (1) herstellen, der eine der Arme mit der Lenkhebelstange (32) und der Richtungsstange (31) verbunden ist und der weitere Arm mit dem Aktuator verbunden ist, wobei dieser Aktuator ein Stellglied (34) umfasst, das mit der Längsachse des Fahrgestells (1) einen Winkel kleiner als 45 Grad einschließt.

11. Fahrzeug nach einem der Ansprüche 8 bis 9, **dadurch gekennzeichnet, dass** es eine Mehrzahl von Modulen aus einschlagenden Rädern umfasst, wobei wenigstens eines dieser Module, ein so genanntes automatisches Einschlagmodul durch einen Aktuator richtungsgesteuert ist, der mit Berechnungs- und Steuermitteln in Beziehung steht, die dazu geeignet sind, den Lenkeinschlag dieses Achssatzes in Abhängigkeit von dem der weiteren Achssätze des Fahrzeugs zu koordinieren.

12. Fahrzeug nach Anspruch 10, **dadurch gekennzeichnet, dass** es wenigstens einen automatisch einschlagenden Achssatz umfasst, dessen Einschlag durch die Berechnungs- und Steuermittel derart bestimmt wird, dass sich sein Kurvenzentrum (c5, c6) im Wesentlichen mit dem von wenigstens einem weiteren Lenkachssatz des Fahrzeugs deckt.

13. Fahrzeug nach einem der Ansprüche 8 bis 12, **dadurch gekennzeichnet, dass** es an einem seiner Enden wenigstens zwei Lenkachssätze umfasst, wobei ein Ende des Lenkhebels (33) eines Moduls (2b) mit einem Ende des Lenkhebels eines Moduls (2d) eines weiteren Achssatzes durch eine Lenkdeichsel (35) verbunden ist, wobei diese Verbindung eine Koordination des Lenkeinschlags der zwei Achssätze gewährleistet.

14. Fahrzeug nach Anspruch 13, **dadurch gekennzeichnet, dass** die Lenkdeichsel (35) mit den Lenkhebeln (33b, 33d) eines Moduls (2b bzw. 2d) jedes Achssatzes an zwei Punkten (335b bzw. 335d) verbunden ist, die eine Gerade definieren, die einen bestimmten Winkel (a9) mit einer Ebene definiert, welche die Achsen der Gelenkverbindungen (331 b bzw. 331 d) enthält, die diese zwei Lenkhebel mit dem Fahrgestell (1) verbinden, wobei der Betrag dieses Winkels (a9) so gewählt werden kann, dass die Kurvenmittelpunkte der zwei Achssätze im Wesentlichen übereinander liegen.

15. Fahrzeug nach einem der Ansprüche 8 bis 14, **dadurch gekennzeichnet, dass** der Lenkhebel (33a) von wenigstens einem Modul (2a bzw. 2c) von jedem Achssatz von einem Aktuator (34a bzw. 34c) angesteuert wird.

16. Fahrzeug nach einem der Ansprüche 8 bis 15, **dadurch gekennzeichnet, dass** es eine längliche Form aufweist und wenigstens zwei Lenkachssätze (511, 512 bzw. 521, 522) umfasst, die beidseits des Schwerpunkts des Fahrzeugs angeordnet sind, wobei der Lenkeinschlag dieser Achssätze derart von Steuerungsmitteln gesteuert und koordiniert wird, dass die durch diese zwei Achssätze dem Fahrgestell aufgeprägten Richtungen (dg, dd) von zwei gegenüberliegenden Seiten des Fahrgestells gesteuert werden, wobei diese Lenkeinschlagskoordination dieser Achssätze auf diese Weise einen Lenkeinschlag des Fahrzeugs entsprechend einem kleinen Wendekreisradius (r5, r6) ermöglicht.

17. Fahrzeug nach einem der Ansprüche 8 bis 16, **dadurch gekennzeichnet, dass** es eine längliche Form aufweist und wenigstens zwei Lenkachssätze (611, 612 bzw. 621, 622) umfasst, die beidseits des Schwerpunkts des Fahrzeugs angeordnet sind, wobei der Lenkeinschlag dieser Achssätze durch Steuerungsmittel derart gesteuert und koordiniert wird, dass die durch diese zwei Achssätze dem Fahrgestell aufgeprägten Richtungen (dg1, dg2) von derselben Seite des Fahrgestells gesteuert werden, wobei diese Lenkwinkelkoordination dieser Achssätze somit eine "krabbenartige" Verlagerung der Gesamtheit des Fahrzeugs erlaubt, d.h. in einer Richtung (dg1, dg2), die eine seitliche Komponente (dlat1, dlat2) bezüglich des Fahrzeugs enthält.

18. Fahrzeug nach einem der Ansprüche 8 bis 17, **dadurch gekennzeichnet, dass** es wenigstens zwei Führerstände (510, 520 bzw. 610, 620) oder Kommandoposten umfasst, wobei jede dieser Kommandostände Befehlsmittel der Gesamtheit der Straßenmodule des Fahrzeugs umfasst.

19. Fahrzeug nach einem der Ansprüche 8 bis 17, **dadurch gekennzeichnet, dass** es wenigstens zwei Führerstände (510, 520 bzw. 610, 620) oder Befehlsposten umfasst, wobei jeder der Führerstände dazu geeignet ist, getrennt einen Teil der Module oder Achssätze des Fahrzeugs zu steuern.

20. Fahrzeug nach einem der Ansprüche 8 bis 19, **dadurch gekennzeichnet, dass** es zwei Rücken an Rücken angeordnete Halbfahrzeuge (51, 52) umfasst, die direkt oder unter Zwischenschaltung einer Deichsel (53) gelenkig verbunden sind, wobei jedes Halbfahrzeug eine Ladefläche (541 bzw. 542) umfasst, dessen Oberfläche unterhalb der Achse (d1) der Räder angeordnet ist, und einen Führerstand (510 bzw. 520), und von wenigstens einem Lenkachssatz (511, 512 bzw. 521, 522) der Seite seines Führerstandes und von wenigstens einem Lenkachssatz (513 bzw. 523) von der Seite der Gelenkverbindung gestützt wird.

21. Fahrzeug nach einem der Ansprüche 8 bis 20, **dadurch gekennzeichnet, dass** es zwei Halbfahrzeug-Zugmaschinen (61, 62) umfasst, die Rücken an Rücken angeordnet sind und jeweils ein Ende eines Ladeteils (64) durch ein Gelenk stützen, wobei jedes Halbfahrzeug einen Ladeflächenteil (541 bzw. 542), dessen Ladefläche unterhalb der Achse (d1) der Räder angeordnet ist, und einen Führerstand (510 bzw. 520) umfasst und von wenigstens einem Lenkachssatz (511, 512 bzw. 521, 522) und wenigstens einem Nichtlenkachssatz (513 bzw. 523) gestützt wird.
